Europäisches Patentamt

European Patent Office

Office européen des brevets

(19)

(11) Publication number: 0 306 277
A1

# (12) EUROPEAN PATENT APPLICATION

(21) Application number: 88308031.9

(22) Date of filing: 31.08.88

(51) Int. Cl.⁴: **B 01 D 46/26**
B 01 D 50/00

(30) Priority: 31.08.87 JP 218122/87
31.08.87 JP 218127/87
31.08.87 JP 133312/87
20.10.87 JP 265692/87

(43) Date of publication of application:
08.03.89 Bulletin 89/10

(84) Designated Contracting States:
CH DE FR GB IT LI

(71) Applicant: TABAI ESPEC CO., LTD.
5-6 Tenjinbashi 3-chome
Kita-ku Osaka (JP)

ITOMAN & CO., LTD.
46 4-chome Hommachi
Higashi-ku Osaka (JP)

Uchida, Taichi
29 Kamibetto-cho Kitashirakawa
Sakyo-ku Kyoto (JP)

(72) Inventor: Nagashima Tsuneo
c/o Tabai Espec.Co.Ltd 5-6 Tenjinbashi 3-chome
Kita-ku, Osaka (JP)

Yamane Makoto
c/o Tabai Espec.Co.Ltd 5-6 Tenjinbashi 3-chome
Kita-ku, Osaka (JP)

(74) Representative: Dodd, David Michael et al
Barlow Gillett & Percival 94 Market Street
Manchester M1 1PJ (GB)

(54) Oil mist remover.

(57) Oil removal apparatus for gas, usually polluted air having entrained oil reduces load on filter (9,10) and its deterioration and maintains a high efficiency of use over a long period, by removing large droplets of oil and particles of dust from the air drawn in through an inlet port (1) before reaching the filter (9,10). A main housing (6) is associated with a straightening box (2) with inlet port (1), and has a ventilation chamber (11) to gas exhaust provisions (12,13) from the main housing (6). A drain chamber (19) for oil discharge is associated with the main housing (6) and collects oil from both the straightening box (2) and the main housing (6). Straightforward movement of air drawn in is interrupted (14) inside the inlet port (1), and oil is deposited and drops into the drain chamber (19) to be discharged. An adjustment chamber (26) assists free oil flow from the straightening box (2) through a main chamber door (4) and has larger inlet (27) than outlet (28). The door (4) fits to the main housing (6) by a seal (36) about a partition (17) gripping edges thereof as well as sealing to each side.

Fig. I

Fig 6

**Description**

## OIL MIST REMOVER

This invention relates to removing oil as droplets or oil mist from gas, particularly from polluted air in factories or other environments susceptible to oil becoming entrained in air.

In one conventional oil removing apparatus. air drawn in from an inlet goes direct to a filter to remove oil droplets or oil mist and dust, but its filter tends to clog resulting in reduced oil removal efficiency.

In other apparatus, a straightening box is provided for removing large oil droplets before further filtering inside a main housing. There, oil is recovered separately from the main housing and from the straightening box, which is inconvenient, and requires additional external piping to bring them together, which occupies further space and raises costs of installation.

Moreover, reduced pressure in the straightening box can result from air being drawn through it to be filtered, also lead to drawing air back from its drain pipe which impedes discharge of oil from the straightening box. In a worst case, oil reforms onto oil drops in the straightening box and enters the main housing, much lowering overall oil removal efficiency.

Often, too, it is difficult to dismount the straightening box from the main housing so that maintenance work inside the main housing, such as replacement of filter, is a troublesome exercise.

This invention arose from seeking to reduce filter load and filter deterioration, and maintain a high oil removal efficiency even if used for a long period, as well as seeking to aid maintenance and recovery of removed oil.

In one aspect this invention provides oil removing apparatus with means for removing largest oil droplets and dust particles entrained in gas, usually air, at a position between first gas inlet and entry to a filter. Suitable means comprises a baffle located to interrupt straightforward passage of gas from the inlet, conveniently as a baffle plate to catch oil droplets deposited thereon and permit them to coalesce and run off the baffle plate.

In another aspect this invention provides means for collecting and removing oil deposited in a straightening box, say from said baffle plate, preferably together with oil recovered in the main filter means, all effectively at one place in the apparatus.

A further aspect of this invention resides in providing shielding plate having a packing to seal between a main housing and a door.

In a still further aspect of this invention, a first gas entry chamber has an associated adjustment chamber adjacent a main housing, and drains communicating into the adjustment chamber, say from said the straightening box, and from the adjustment chamber, say to the main housing, preferably via said door. The cross-sectional area of the drain into the adjustment chamber is preferably larger than the drain out of the adjustment chamber.

In one embodiment of this invention said baffle plate is in a straightening box from which air will pass to the main housing, a door to the main housing carries the straightening box, a drain chamber is provided beneath the main housing and the door, and drains are provided from the bottom of the main housing and the door into the drain chamber.

Using a said baffle plate removes large oil droplets and solid particles. As a result, the air reaching filter means contains mostly smaller droplets of oil and particles of dust, which helps retard deterioration of the filter means.

Practical implementation of embodiments of this invention will now be described, by way of example, with reference to the accompanying drawings in which:

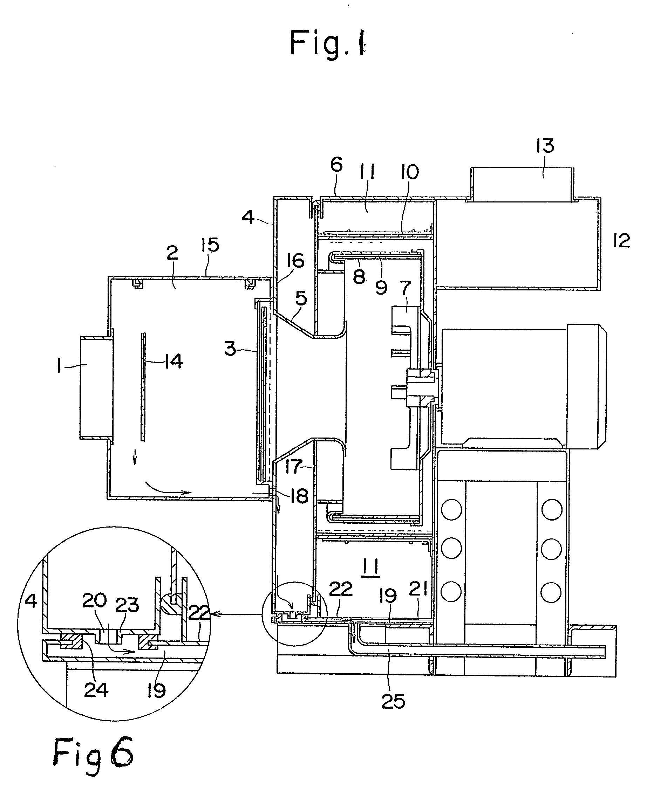

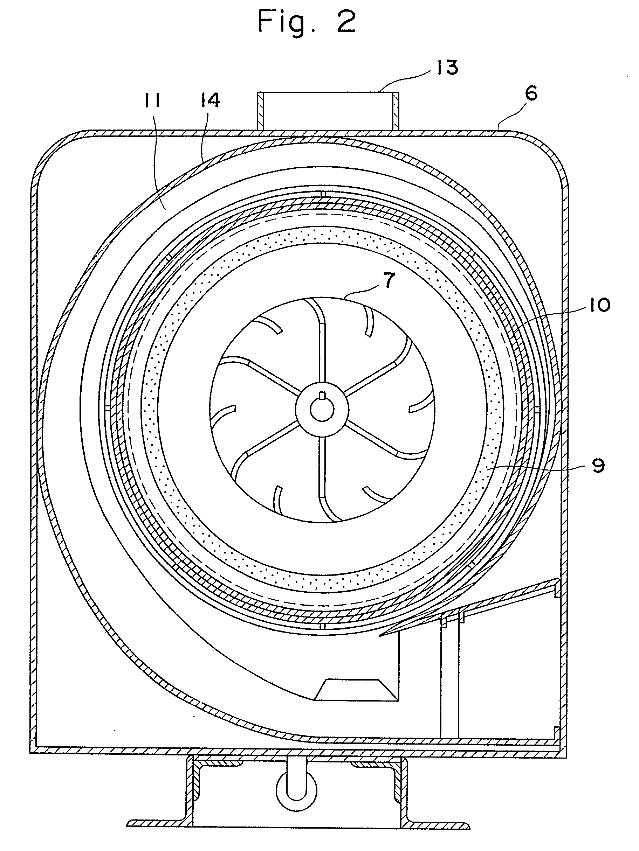

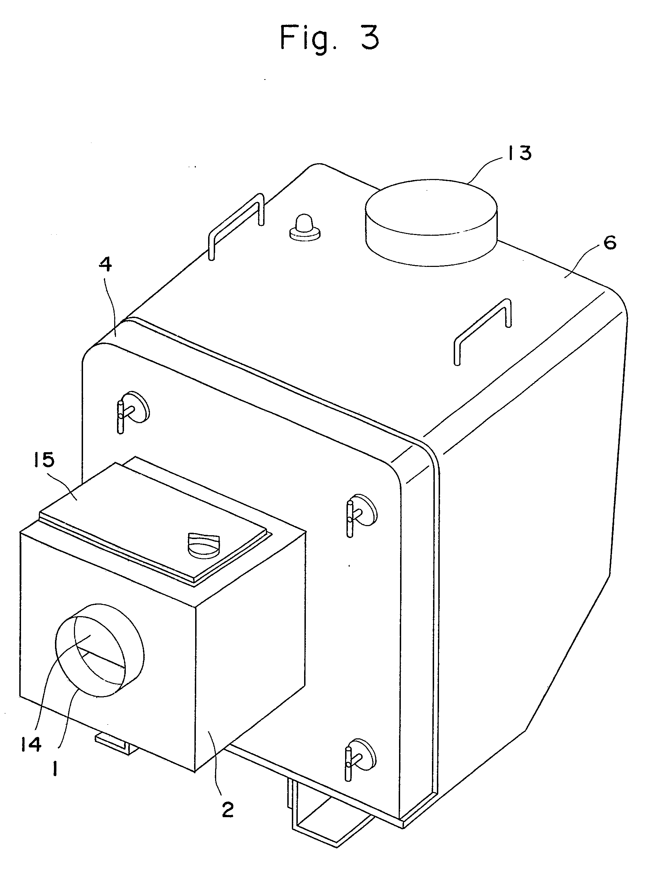

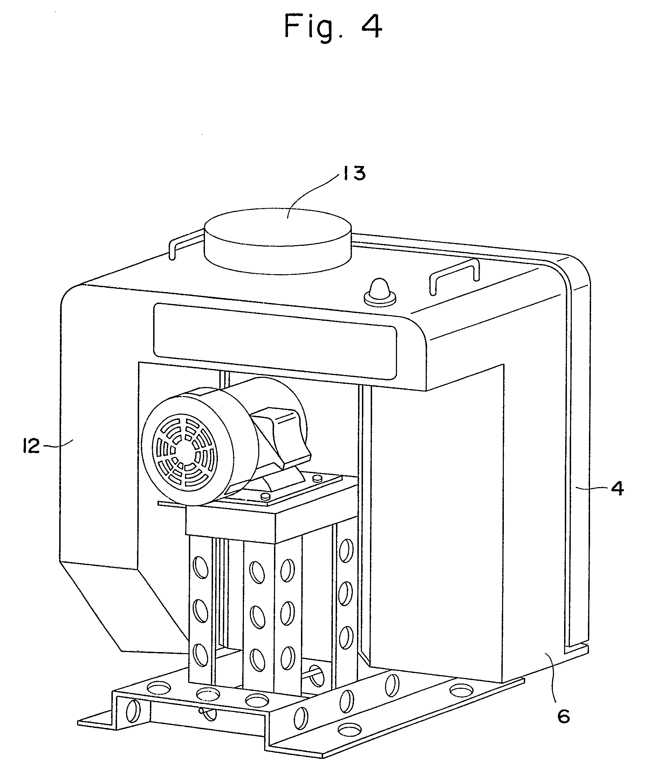

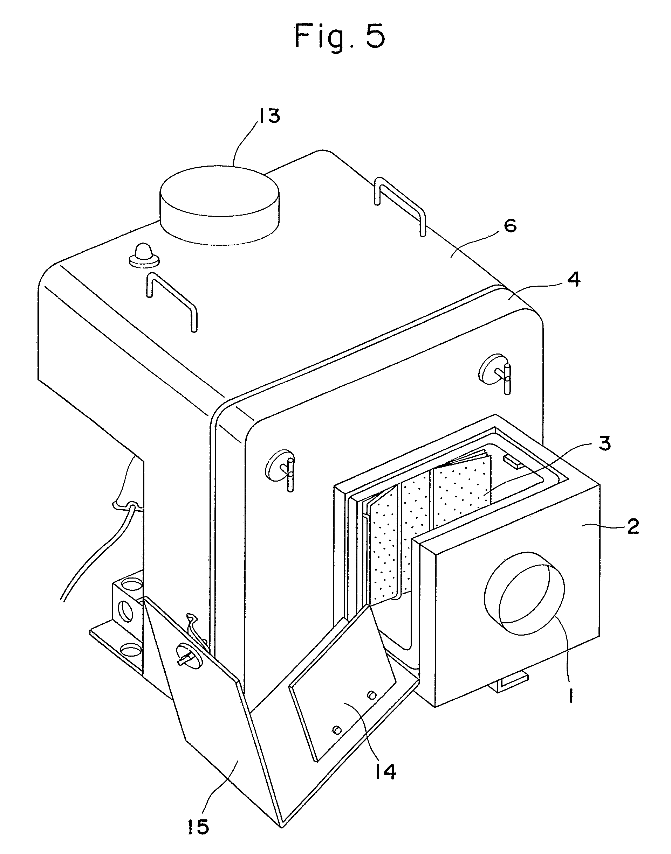

Figures 1 to 5 show one embodiment of oil removal apparatus, Fig. 1 being a longitudinal sectional view, Fig. 2 a section view on line A-A of Fig. 1, Fig. 3 a perspective outline view from the front, Fig. 4 a perspective outline view from the rear, Fig. 5 a perspective view of the front part with its cover removed; and Fig. 6 shows a detail of Figure 1;

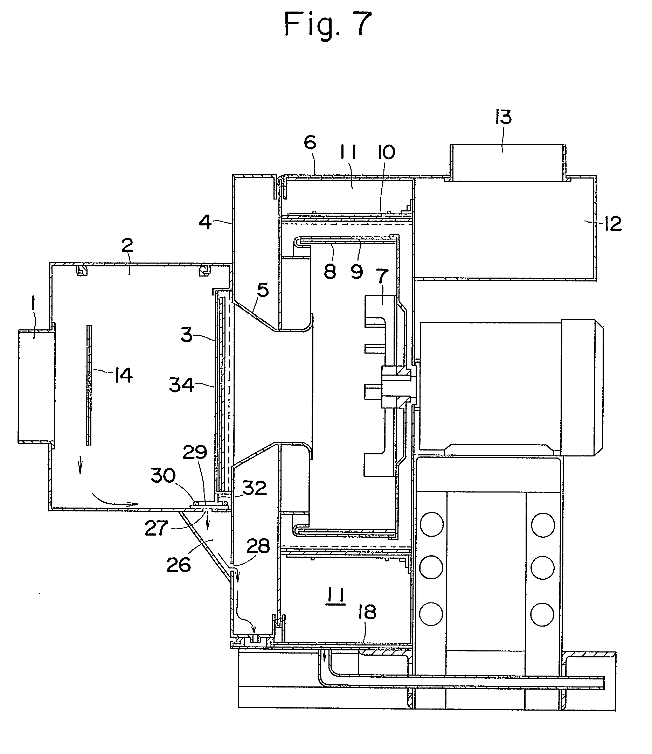

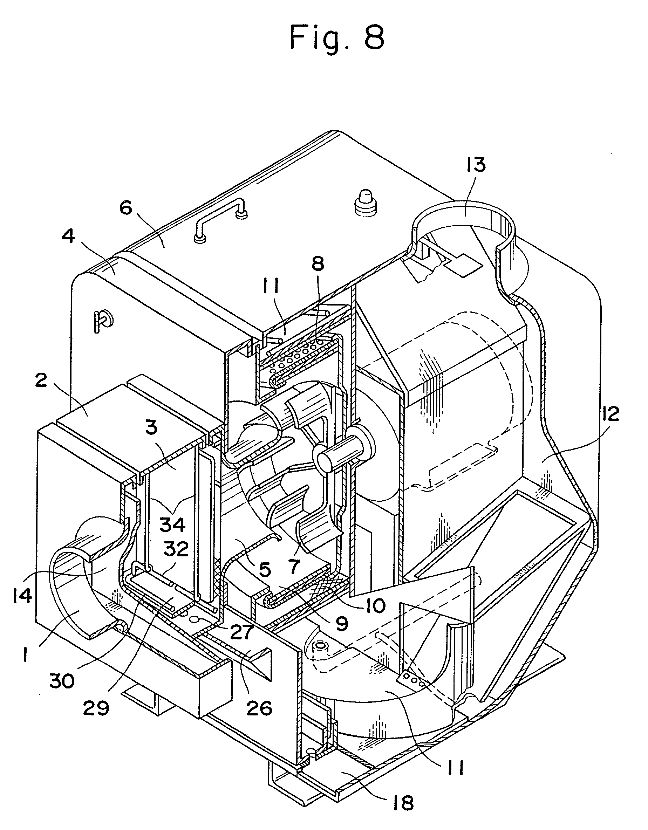

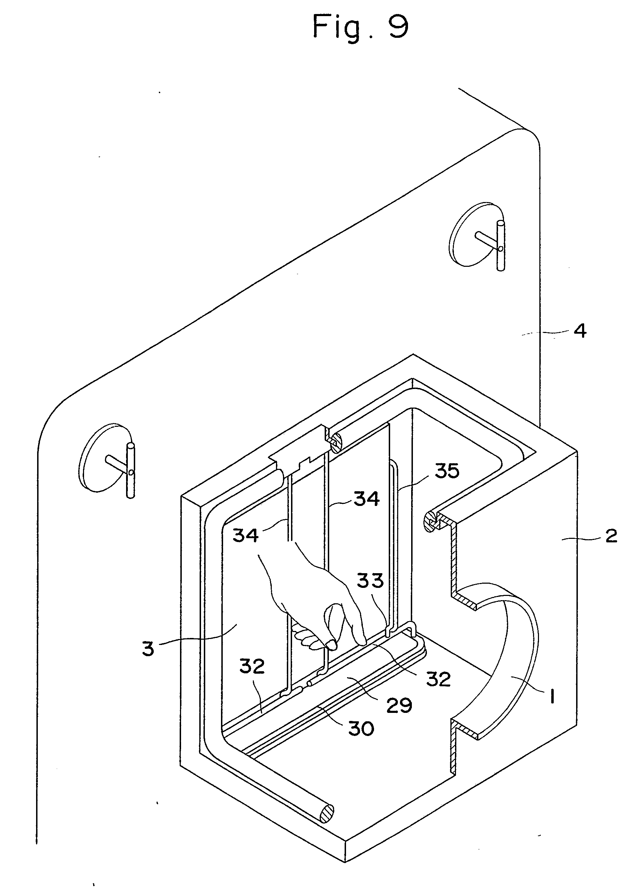

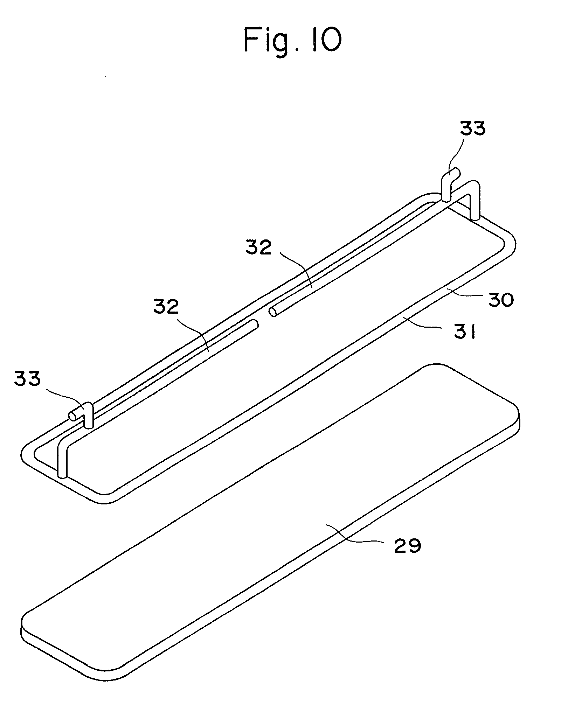

Figures 7 to 10 show a variant of oil removal apparatus, Fig. 7 being a longiudinal sectional view, Fig. 8 an explanatory perspective drawing broken away to show internal structure, Fig. 9 a perspective view showing assembled filter and filter holder, and Fig. 10 a perspective view of that filter and filter holder; and

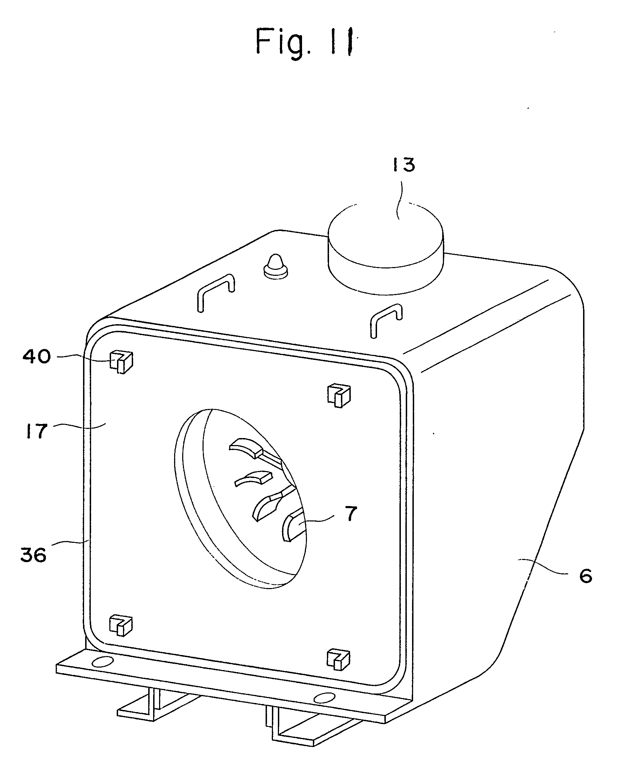

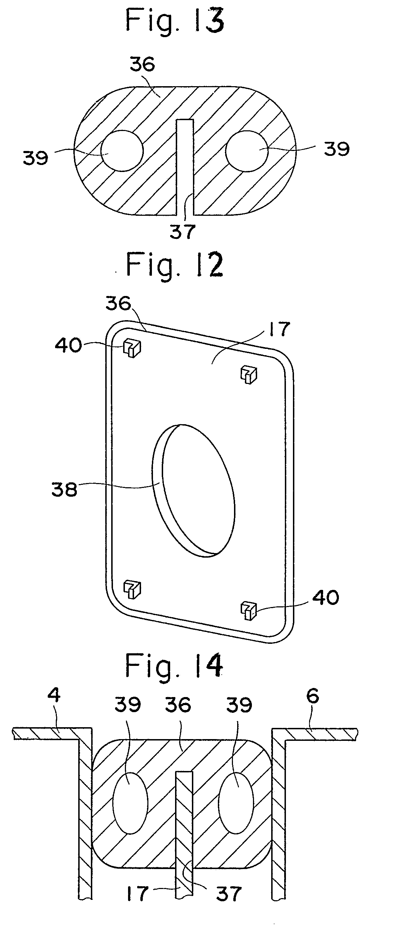

Figures 11 to Fig. 14 show further details, Fig. 11 being a perspective view with the door taken off, Fig. 12 a perspective view of a shielding plate and packing, Fig. 13 a sectional view of the packing, and Fig. 14 an enlarged view of part A.

Referring first to Figs. 1 to 5, air drawn by fan 7 through inlet port 1 enters a straightening box 2 then goes into and through a drum 8 outside the fan 7 in a main housing 6. An air guide 5 extends from the straightening box 2 from a front filter 3 through a door 4. The drum 8 houses a rotary filter 9, and air passing through the rotary filter 9 further passes through a fixed filter 10, then through a ventilation chamber 11 into a chamber 12 provided at the rear part of the main housing 6, and is discharged from an exhaust port 13.

Inside the straightening box 2 facing the inlet port 1 is a baffle plate 14 for blocking straight advance of drawn-in air so as to take out largest oil droplets that deposit thereon, coalesce and run down off its bottom edge.

A cover 15 serves for access to the straightening box 2 between the inlet port 1 and the door 4, and the baffle plate 14 is attached to this cover 15 as indicated in Fig. 5.

The straightening box 2 is connected to the door 4 at an apertured partition 16 carrying a front filter 3. The air guide 5 goes through the door 4 to the drum 8. The door 4 is detachably fitted to the main housing 6 over a plate 17 apertured for the air guide 5.

Air drawn in through the inlet port 1 spreads out to pass the baffle plate 14 by way of upper, lower and side spaces about the baffle plate 14 inside the box 2. Relatively large droplets of oil and dust particles in input air deposit on the baffle plate 14 and the partly stripped air further flows inward to the filter drum 8 for removal of smaller droplets of oil and dust particles.

Accumulation of oil and dust on the baffle plate 14 results in their flow down the surface of the baffle plate 14, to drop into the bottom of the straightening box 2. From there, further flow in the bottom of the straightening box 2 goes through a lower part of the door 4 at 18 and down the interior of the door 4 and out into drainage from the main housing before discharge outside the apparatus.

The cover 15 can be opened to clean the inside of the baffle plate 14 and the straightening box 2, and to replace the front filter 3.

Fig. 6 shows detail for drainage via chamber 19 beneath the door 4 and the main housing 6. The drain chamber 19 is united with the main housing 6, and communicates with the main housing 6 through drain hole 21 of outer wall 22 of the ventilation chamber 11. The door 4 attached to the main body case 6 and has a drain hole 20 into the drain chamber 19 through door outlet pipe 23 sealed at 24 relative to the drain chamber 19. A common discharge pipe 25 is connected to the bottom of the drain chamber 19.

The drain chamber 19 thus collects oil running off the baffle plate 4 and the front filter 3, as well as oil from the main housing 6 off the rotary filter 9, the fixed filter 10, and the outer wall 22 of the ventilation chamber outer wall 22 via the drain hole 21. Those oil collections merge for discharge from the discharge pipe 25.

The drain chamber 19 can be placed at the bottom or to one side of the main housing 6, preferably with the door 4 fitted to allow the drain chamber to be removed, and the door and the drain chamber to be cleaned at the same time.

In Fig. 7, an adjustment chamber 26 is located adjacent the straightening box 2 with a drain hole 27 from the straightening box 2 and a drain hole 28 through the door 4. The size of the drain hole 27 is greater than that of the drain hole 28. In practice, there will be a plurality of each of the holes 27 and 28 spaced along the width of the apparatus.

Above drain hole(s) 27, in the straightening box 2, see also Fig. 8 and Fig. 9, is a filter 29, shown fitted via a filter holder 30. The filter holder 30, see also Fig. 10, has upper arms 32 extending aligned towards each other from opposite sides of a rectangular framework 31, and also upper oppositely directed projections 33 from the arms 32. When the filter 29 and filter holder 30 are fixed in the apparatus, the right and left upper arms 32 engage and are pressed down by two holding rods 34 for supporting the front filter 3, and the projections 33 are engaged by lower ends of other rods 35.

Flow of oil dropping to the bottom of the straightening box 2 towards drain holes 27 in the door 4 is actually aided by the air flow through the box 2. As each drain hole 27 from the straightening box is larger than each drain hole 28 to the door 4, resistence to air flow out of the drain hole 27 is lower, so that oil drops readily into the adjustment chamber 26. Oil accumulating in the adjustment chamber 26 will flow down the sloping adjustment chamber wall to the drain hole 28 when its weight overcomes any air flow drawn in through the hole 28, and collected oil then discharges through the drain hole 28. The adjustment chamber filter 21 is close to the bottom of the box 2 and prevents large solids from going into through drain hole 27 thus the risk of clogging of the smaller drain hole 28. Oil is not left stagnant in the straightening box 2, blowing back up of oil drops is eliminated, and recovered oil discharges smoothly and efficiently through the drain holes 27, 28.

Fig. 11 shows the removable shielding plate 17 between the main housing 6 and the door 4 held by its edges in a groove 37 in a peripheral packing 36.

The shielding plate 17 can have a cylindrical opening part 38 to take the guide 5, see Fig. 12, and the packing 36 is readily fitted on its outer edge. As well as a groove 37 into its inner edge, the packing is hollow at 39 on both sides of the groove 37, see Fig. 14, inside both sides each formed as a rounded lobe in section. Fig. 14 shows the packing 36 on the shielding plate 17. This shielding plate 17 is readily bolted or screwed to the main housing 6, and stops 40 are provided at four positions on the front to engage the door 4.

The front of the main housing 6 is thus fully openable except for a lip to engage the packing 36 of the shielding plate 17. The packing 36 ensures an airtight seal at both of its resiliently deformable lobed sides and is easily removed and replaced, no adhesive being required.

Leaks of air from the door into the ventilation chamber 11, or vice-versa are thus eliminated. There is sealing pressure at both sides and good sealing grip on edges of the shielding plate 17. Having the groove 37 formed in the inner surface of the packing 36 facilitiates mounting on the outer edge of the shielding plate 17, and maximises the size the opening for access to the main housing 6.

## Claims

1. Oil removing apparatus for use in cleaning gas, usually polluted air with entrained oil, the apparatus comprising a main housing (6) with gas inlet (1) and gas outlet (12,13) provisions relative to filter means (8,9,10), and recovered oil discharge means (18-25), also a gas flow straightening box (2) through which gas is entrant the main housing, wherein means (14) for interrupting straightforward movement of entrant gas is disposed inside said straightening box (2).

2. Apparatus according to claim 1, wherein the last-mentioned means (14) is a flat baffle plate (14) facing gas inlet (1) to the straightening box (2).

3. Apparatus according to claim 2, comprising a cover (15) removably fitting to said straightening box (2), said baffle plate (14) being fitted to said cover (15).

4. Apparatus according to claim 3, having oil draining provisions (20,21) at or near the bottom of both of the straightening box (2) and the main housing (6), which drainage provisions both lead to a common drain chamber (19) located in the lower part of the main housing (6).

5. Oil removing apparatus for use in cleaning gas, usually polluted air, with entrained oil, the apparatus comprising a main housing (6) with gas inlet (1) and gas outlet (12,13) provisions, also oil discharge means (18-25), wherein a door (4) detachably mounts to the main housing (6) between the main housing (6) and means (1,2) affording first gas inlet to the apparatus.

6. Apparatus according to claim 5, wherein said means (1,2) affording gas inlet comprises a box (2) mounting on said door (4).

7. Apparatus according to claim 6, wherein said oil discharge means includes drains into (18) said door (4) from (20) said box (2) and out of said door (4) to a drain chamber (19).

8. Apparatus according to claim 7, wherein said oil discharge means further includes drains (22) from the bottom of the main housing (6) and from an outer wall (22) of gas exhaust provisions (11), also to said drain chamber (19).

9. Oil removing apparatus for use in cleaning gas usually polluted air, having entrained oil, comprising a main housing (6), a chamber (2) affording gas inlet to the main housing (6), gas outlet means (12,13) from the main housing (6), and oil discharge means (18-28) from the main housing (6), wherein said chamber (2) affording gas inlet has an associated adjustment chamber (26) located adjacent the main housing (6) and having a drain (22) from the chamber (2) affording gas inlet and a drain (28) out of the adjustment chamber (26).

10. Apparatus according to claim 9, wherein cross-sectional area of the drain (22) from the chamber (2) affording gas inlet is larger than that of the drain (28) out of the adjustment chamber (26).

11. Apparatus according to claims 5 and 10, wherein the adjustment chamber is united with the chamber affording gas inlet, and a plurality of holes (27,28) for said drains are provided into the adjustment chamber (26) and out into the door (4), respectively.

12. Apparatus according to claim 5 or 11, having a shielding plate (17) between the main housing case (6) and the door (4), and a packing (36) fitted about the shielding plate (17).

13. Apparatus according to claim 12, wherein the packing (36) has a groove (37) taking edges of the shielding plate (17), and hollow formations (39) at both sides of the groove (37).

Fig. 1

Fig 6

EP 0 306 277 A1

Fig. 2

# Fig. 3

# Fig. 4

# Fig. 5

# Fig. 7

# Fig. 8

# Fig. 9

# Fig. 10

# Fig. 11

Fig. 13

36

39          37          39

Fig. 12

36          17

40

38          40

Fig. 14

4          39   36   39          6

17          37

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 378 555 (SANETSU K.K.) --- | | B 01 D 46/26 |
| A | PATENT ABSTRACTS OF JAPAN, vol. 5, no. 188 (C-81)[860], 27th November 1981; & JP-A-56 111 016 (SANETSU K.K.) 02-09-1981 --- | | B 01 D 50/00 |
| A | FR-A-2 132 868 (GENERAL DYNAMICS CORP.) --- | | |
| A | GB-A-1 488 500 (AERCOLOGY, INC.) ----- | | |

TECHNICAL FIELDS
SEARCHED (Int. Cl.4)

B 01 D 46/00
B 01 D 50/00

The present search report has been drawn up for all claims

| Place of search | Date of completion of the search | Examiner |
|---|---|---|
| THE HAGUE | 19-10-1988 | POLESAK, H.F. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.........................................................................
& : member of the same patent family, corresponding
    document

EPO FORM 1503 03.82 (P0401)